(19) Europäisches Patentamt
European Patent Office
Office européen des brevets

(11) EP 1 210 787 B1

(12) **EUROPÄISCHE PATENTSCHRIFT**

(45) Veröffentlichungstag und Bekanntmachung des Hinweises auf die Patenterteilung:
**30.11.2005 Patentblatt 2005/48**

(21) Anmeldenummer: **00965926.9**

(22) Anmeldetag: **06.09.2000**

(51) Int Cl.[7]: **H04L 1/20**, H04L 1/00

(86) Internationale Anmeldenummer:
**PCT/EP2000/008702**

(87) Internationale Veröffentlichungsnummer:
**WO 2001/020839 (22.03.2001 Gazette 2001/12)**

(54) **VERFAHREN ZUM SCHÄTZEN DER BITFEHLERRATE IN EINEM FUNKEMPFÄNGER SOWIE ENTSPRECHENDER FUNKEMPFÄNGER**

METHOD FOR ESTIMATING THE BIT ERROR RATE IN A RADIO RECEIVER AND CORRESPONDING RADIO RECEIVER

PROCEDE PERMETTANT D'EVALUER LE TAUX D'ERREURS SUR LES BITS DANS UN RECEPTEUR RADIO ET RECEPTEUR RADIO CORRESPONDANT

(84) Benannte Vertragsstaaten:
**AT BE CH CY DE DK ES FI FR GB GR IE IT LI LU MC NL PT SE**

(30) Priorität: **10.09.1999 DE 19943386**

(43) Veröffentlichungstag der Anmeldung:
**05.06.2002 Patentblatt 2002/23**

(73) Patentinhaber: **Infineon Technologies AG
81669 München (DE)**

(72) Erfinder:
- **HARTMANN, Ralf
81377 München (DE)**
- **BOHNHOFF, Peter
81667 München (DE)**

(74) Vertreter: **Graf Lambsdorff, Matthias et al
Patentanwälte
Lambsdorff & Lange
Dingolfinger Strasse 6
81673 München (DE)**

(56) Entgegenhaltungen:
**WO-A-98/07240 US-A- 5 119 400**

- **KOCH W ET AL: "OPTIMUM AND SUB-OPTIMUM DETECTION OF CODED DATA DISTURBED BY TIME- VARYING INTERSYMBOL INTERFERENCE" PROCEEDINGS OF THE GLOBAL TELECOMMUNICATIONS CONFERENCE AND EXHIBITION(GLOBECOM),US,NEW YORK, IEEE, Bd. -, 2. Dezember 1990 (1990-12-02), Seiten 1679-1684, XP000218858 ISBN: 0-87942-632-2 in der Anmeldung erwähnt**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zum Schätzen der Bitfehlerrate in einem Funkempfänger sowie einen entsprechenden Funkempfänger, insbesondere Mobilfunkempfänger.

Übertragungskanäle in Mobilfunksystemen sind durch ihren zeitabhängigen Mehrwege-Empfang charakterisiert, der bei digitalen Übertragungssystemen zu Intersymbol-Interferenzen führt. Um derartige Intersymbol-Interferenzen bewältigen zu können, ist empfangsseitig eine Entzerrung der empfangenen Daten erforderlich. Sendeseitig werden die zu übertragenden Daten aufgrund der sich schnell ändernden Übertragungsbedingungen sowie zur Unterdrückung von Nachbarkanal- und Gleichkanalstörungen in zellularen Netzen in der Regel verwürfelt (Interleaving) und kanalcodiert übertragen (beispielsweise bei Sprachübertragungen gemäß dem GSM-Mobilfunkstandard). Im Empfänger werden die Empfangsdaten nach der Entzerrung dann entsprechend decodiert.

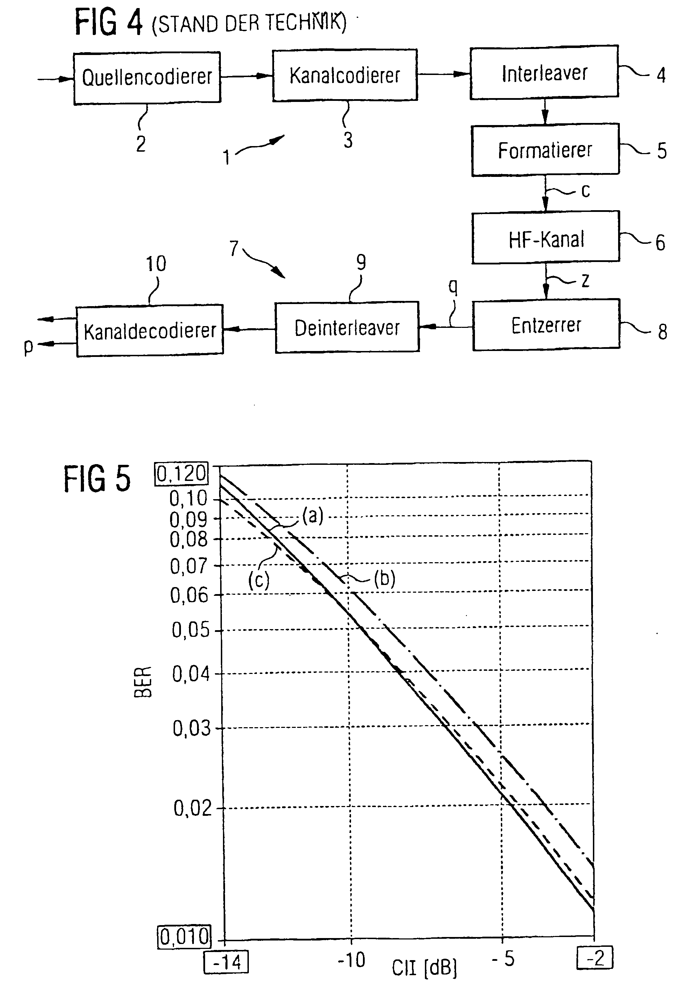

In Fig. 4 ist ein beispielhaftes Übertragungsmodell eines derartigen Mobilfunksystems dargestellt, wobei ein Mobilfunksender 1 und ein Mobilfunkempfänger 7 gezeigt sind, welche über einen Kanal 6 miteinander kommunizieren.

In dem Sender 1 werden zu übertragende Informationen, beispielsweise Sprachinformationen, von einem Quellencodierer 2 zunächst in ein digitales Signal, d.h. in eine Folge von binären Symbolen, umgesetzt und in Form von quellencodierten Datenwörtern oder Datenvektoren ausgegeben. Von einem Kanalcodierer 3 wird jedes Datenwort in ein Codewort abgebildet, dessen Symbole von einem Interleaver 4 permutiert, d.h. verwürfelt werden. Idealerweise erfolgt das Interleaving derart, daß beliebige zwei Symbole eines Codeworts auf zwei unterschiedliche Ausgangswörter des Interleavers 4 abgebildet werden. Der Formatierer 5 fügt schließlich am Anfang und Ende jedes Datenworts des Interleavers 4 eine bestimmte Anzahl von bekannten Symbolen (sogenannte Tail-Symbole) an und gibt Sendedatenwörter oder Sendevektoren $\underline{c}$ aus, die über den Hochfrequenz-Kanal 6 an den Empfänger 7 übertragen werden. Der in Fig. 4 gezeigte Kanal 6 umfaßt u.a. den Modulator und Verstärker des Senders 1, den eigentlichen HF-Kanal (Übertragungskanal) sowie die Vorempfangsstufe, das Eingangsfilter und den A/D-Wandler des Empfängers 7.

Im Empfänger 7 besitzen der Entzerrer 8, der Deinterleaver 9 und der Kanaldecodierer 10 gemeinsam die Aufgabe, anhand der Empfangssequenz $\underline{z}$ die ursprüngliche Sendesequenz $\underline{c}$ mit größtmöglicher Zuverlässigkeit zu bestimmen. Dazu werden mit Hilfe einer sogenannten Soft Decision Zuverlässigkeitsinformationen q für den Kanaldecodierer 10 erzeugt, welche für jedes empfangene Symbol die a-priori-Wahrscheinlichkeit angeben, daß das empfangene Symbol beispielsweise auf einer gesendeten '-1' oder '+1' beruht. Zur Erzeugung dieser Zuverlässigkeitsinformationen wird der Kanal 6 modelliert und das daraus resultierende Kanalmodell durch ein entsprechendes Trellis-Diagramm dargestellt, welches das Verhalten des Kanals in Form von Zustandsübergängen beschreibt. Durch Anwendung des sogenannten Viterbi-Algorithmus können dann anhand des Trellis-Diagramms die zuvor erwähnten Zuverlässigkeitsinformationen q in Form von Wahrscheinlichkeitsangaben ermittelt werden. Für nähere Einzelheiten zur Ermittlung der Zuverlässigkeitsinformationen mit Hilfe des Viterbi-Algorithmus wird auf "Digital Communications", Proakis, J.G., McGraw-Hill, New Y-ork, 1983, oder "Optimum And Sub-Optimum Detection Of Coded Data Disturbed By Time-Varying Intersymbol Interference", Wolfgang Koch und Alfred Baier, 1990 IEEE, verwiesen.

Die Übertragung kanalcodierter Daten besitzt neben einer höheren Übertragungssicherheit zudem den Vorteil, daß anhand der Kanaldecodierung auch Informationen p über die Bitfehlerrate (BER) gewonnen werden können. So kann beispielsweise beim Einsatz von Faltungscodes beim Decodieren leicht die Anzahl der durch die Decodierung korrigierten Fehler ermittelt werden, so daß eine ausreichende Schätzung der Bitfehlerrate möglich ist.

Es sind jedoch auch Mobilfunksysteme bekannt, bei denen die Daten uncodiert übertragen werden und somit der in Fig. 4 gezeigte Kanalcodierer 3 und Kanaldecodierer 10 entfallen (beispielsweise bei GPRS-Systemen). In derartigen Fällen muß somit die Abschätzung der Bitfehlerrate auf andere Art und Weise erfolgen.

Aus der Schrift WO 98/07240 Al ist ein Verfahren bekannt, nach welchem die Verbindungsqualität zwischen einem Funksender und einem Funkempfänger abgeschätzt werden kann. Dieses Verfahren basiert auf einem Viterbi-Algorithmus. Dazu werden für jeden Punkt eines Trellis-Diagramms zwei sogenannte Übergangswerte berechnet. Die Übergangswerte entsprechen dem Logarithmus der Wahrscheinlichkeit für einen Übergang in diesen Punkt. In jeder Spalte des Trellis-Diagramms werden das Maximum für beide Übergangswerte sowie die Differenz beider Maxima ermittelt. Aus dem Differenzwert wird auf die Verbindungsqualität in dem den Sender und den Empfänger umfassenden Funksystem geschlossen.

In der Schrift US 5,119,400 A ist ein weiteres Verfahren beschrieben, das zur Abschätzung der Verbindungsqualität zwischen einem Funksender und einem Funkempfänger dient. Dieses Verfahren beinhaltet die Erzeugung von Zuverlässigkeitsinformationen mittels eines in den Funkempfänger integrierten Entzerrers. Die Zuverlässigkeitsinformationen geben die Wahrscheinlichkeit an, mit welcher die von dem Funkempfänger empfangenen Daten den von dem Funksender ausgesandten Daten entsprechen.

Der vorliegenden Erfindung liegt die Aufgabe zugrunde, ein Verfahren zum Schätzen der Bitfehlerrate in einem Funkempfänger sowie einen entsprechenden Funkempfänger anzugeben, womit eine zuverlässige Schätzung der Bitfehlerrate insbesondere auch bei uncodierter Übertragung der Daten möglich ist.

Diese Aufgabe wird erfindungsgemäß durch ein Verfahren mit den Merkmalen des Anspruches 1 bzw. einen Funkempfänger mit den Merkmalen des Anspruches 6 gelöst. Die Unteransprüche definieren jeweils bevorzugte und vorteilhafte Ausführungsformen der vorliegenden Erfindung.

Erfindungsgemäß werden Informationen über die Bitfehlerrate des Empfangssignals aus den Zuverlässigkeitsinformationen abgeleitet, die in dem Funkempfänger insbesondere in Form von sogenannten Soft Decision-Informationen vorliegen und ohnehin erzeugt werden. Auf relativ einfache Weise kann somit in dem Empfänger die einem kompletten Burst entsprechende Bitfehlerrate berechnet werden.

Eine Vereinfachung und somit Aufwandsreduzierung kann erzielt werden, wenn die Zuverlässigkeitsinformationen durch Pfadmetriken des besten "+1"-Pfads und des besten "-1"- oder "0"-Pfads eines Trellis-Diagramms angenähert werden, welches den jeweiligen Funkkanal beschreibt.

Die vorliegende Erfindung eignet sich insbesondere zur Bitfehlerratenschätzung in Mobilfunksystemen, beispielsweise GSM-Mobilfunksystemen, und kann auch auf mehrwertige Symbolalphabete, wie sie beispielsweise in EGPRS-Systemen gemäß der GSM-Weiterbildung EDGE vorgesehen sind, übertragen werden.

Die Erfindung wird nachfolgend unter Bezugnahme auf die Zeichnung anhand eines bevorzugten Ausführungsbeispiels näher erläutert.

Fig. 1 zeigt ein Mobilfunk-Übertragungsmodell mit einem erfindungsgemäßen Mobilfunkempfänger in Form eines einfachen Blockschaltbilds,

Fig. 2 zeigt ein Modell des Kanals des in Fig. 1 gezeigten Mobilfunksystems,

Fig. 3A und 3B zeigen Darstellungen zur Erläuterung der Metrikberechnung in einem Trellis-Diagramm,

Fig. 4 zeigt ein Mobilfunk-Libertragungsmodell mit einem bekannten Mobilfunkempfänger in Form eines einfachen Blockschaltbilds, und

Fig. 5 zeigt eine Darstellung zur Erläuterung der mit Hilfe der vorliegenden Erfindung erzielbaren guten Ergebnisse bei der Bitfehlerratenschätzung.

Die vorliegende Erfindung beruht auf der Annahme, daß im Empfänger das Empfangssignal mit Hilfe eines bereits anhand Fig. 4 erläuterten Entzerrers entzerrt wird, welcher Zuverlässigkeitsinformationen über die von ihm durchgeführte Entzerrung in Form von sogenannten Soft Decision-Informationen ausgibt. Nachfolgend sollen kurz die Grundlagen der Gewinnung dieser Zuverlässigkeitsinformationen erläutert werden, soweit sie für das Verständnis der Erfindung erforderlich sind.

wie bereits erwähnt worden ist, handelt es sich bei diesen Zuverlässigkeitsinformationen um Informationen, welche durch eine sogenannte Soft Decision gewonnen werden. Im Gegensatz zu einer Hard Decision, bei der lediglich eine feste Entscheidungsschwelle verwendet wird, wird bei einer Soft Decision eine Vielzahl von Entscheidungsschwellen verwendet und somit die Entscheidungssicherheit deutlich erhöht. Entzerrer, wie sie beispielsweise in GSM-Empfängern eingesetzt werden und auch gemäß der zukünftigen Erweiterung des GSM-Mobilfunkstandards, EDGE, vorgesehen sind, müssen daher einerseits das Empfangssignal ausreichend entzerren andererseits die zuvor beschriebenen Zuverlässigkeitsinformationen bereitstellen.

Zur Herleitung und Erläuterung des der vorliegenden Erfindung zugrundeliegenden Prinzips wird nachfolgend auf die bereits erwähnte Druckschrift "Optimum And Sub-Optimum Detection Of Coded Data Disturbed By Time-Varying Intersymbol Interference", Wolfgang Koch und Alfred Baier, 1990 IEEE, und insbesondere auf das in Fig. 1 gezeigte Übertragungsmodell eines erfindungsgemäßen Mobilfunksystems Bezug genommen, wobei ein Mobilfunksender 1 und ein Mobilfunkempfänger 7 dargestellt sind, welche über einen Kanal 6 miteinander kommunizieren. Bei dem in Fig. 1 gezeigten Mobilfunksystem ist im Gegensatz zu Fig. 4 keine Kanalcodierung und Kanaldecodierung vorgesehen. ,

Wie bereits erläutert worden ist, werden in dem Sender 1 zu übertragende Informationen, von einem Quellencodierer 2 in ein digitales Datenwort umgesetzt und von einem Interleaver 4 permutiert, d.h. verwürfelt. Ein Formatierer 5 fügt am Anfang und Ende jedes Datenworts des Interleavers 4 J bekannte Symbole (sogenannte Tail-Symbole) an, um einen definierten Anfangs- und Endzustands des nachfolgend näher erläuterten Modells des Kanals vorzugeben. Von dem Formatierer 5 werden somit Sendewörter oder Sendevektoren $\underline{c}$ mit $\underline{c} = (C_{1-J}, ..., c1, c2, ..., c_M)$ und M = I+J ausgegeben, wobei I die Länge der von dem Interleaver 4 ausgegebenen Datenwörter bezeichnet.

Der in Fig. 1 gezeigte Kanal 6, welcher u.a. den Modulator und Verstärker des Senders, den eigentlichen HF-Kanal (Übertragungskanal) sowie die Vorempfangsstufe, das Eingangsfilter und den A/D-Wandler des Empfängers umfaßt, kann durch das in Fig. 2 gezeigte Kanalmodell dargestellt werden. Das Kanalmodell entspricht einer Zustandsmaschine mit L Speicherstufen, deren einzelnen zwischengespeicherten Sendesymbole $c_m...C_{m-L}$ über Multiplizierer 12 mit Hilfe eines Addierers 13 addiert werden. Die Koeffizienten $h_0...h_L$ entsprechen den Koeffizienten der Kanalimpulsantwort. In dem Modell ist auch das im Übertragungskanal auftretende Rauschen in Form des additiven weißen Gaußrauschens (AWGN) mit der Leistung $\sigma^2$ berücksichtigt, welches mit Hilfe eines Addierers 14 das Ausgangssignal des Addierers 13 überlagert, so daß schließlich ein Empfangssymbol $z_m$ des Empfängers erhalten wird.

Im Empfänger 7 besitzt der Entzerrer 8 u.a. die Aufgabe, anhand der (verzerrten) Empfangssequenz $\underline{z}$ die ursprüngliche Sendesequenz $\underline{c}$ mit größtmöglicher Zuverlässigkeit zu bestimmen. Dazu werden mit Hilfe einer Soft Decision Zuverlässigkeitsinformationen q erzeugt, welche für jedes empfangene Symbol die a-priori-Wahrscheinlichkeit angeben, daß das empfangene Symbol auf einer gesendeten '+1' oder '-1' beruht.

Ein optimaler MAP-Entzerrer ('Maximum A-Priori Probability') liefert als Soft Decision-Information für jedes (zweiwertige) Sendesymbol $c_n$ den Wert

$$q(c_n) = \ln \frac{P\{\underline{z}_n | c_n = +1\}}{P\{\underline{z}_n | c_n = -1\}} \quad (1)$$

Wird von einem höherwertigen Symbolalphabet mit

$$C_n = (C_{n,1}, \ldots, C_{n,m}) \quad (2)$$

und

$$c_{n,i} \in \{+1,-1\} \quad (3)$$

ausgegangen, kann die Soft Decision-Information für jedes Bit separat berechnet werden:

$$q(c_{n,i}) = \ln \frac{P\{\underline{z}_n | c_{n,i} = +1\}}{P\{\underline{z}_n | c_{n,i} = -1\}} \quad (4)$$

Ein höherwertigeres Symbolalphabet wird z.B. in der GSM-Weiterentwicklung EDGE (Enhanced Data Services for GSM Evolution) eingesetzt.

Jeder Empfangsvektor $\underline{z}$ ist statistisch durch seine Wahrscheinlichkeitsdichte wie folgt beschrieben:

$$P\{\underline{z}_n | \underline{c}\} = \frac{1}{2\pi\sigma^2 M} \exp\left(\frac{-\sum_{\mu=1}^{M} \left| z_\mu - \sum_{l=0}^{L} c_{\mu-l} h_l \right|^2}{2\pi\sigma^2}\right) \quad (5)$$

Aus Formel (5) kann

$$P\{\underline{z}_n | c_n\}$$

für die einzelnen Symbole des Empfangsvektors $\underline{c}$ abgeleitet werden.

Das Vorzeichen von $q(c_n)$ entspricht dem wahrscheinlichsten Informationsgehalt von $c_n$, und der Absolutwert von q ist ein Maß für die Zuverlässigkeit dieses Informationsgehalts.

Zu Erzeugung dieser Zuverlässigkeitsinformationen $q(c_n)$ wird das in Fig. 2 gezeigte Kanalmodell durch ein entsprechendes Trellis-Diagramm dargestellt, welches das Verhalten des Kanals in Form von Zustandsübergängen beschreibt. Die Trellis gibt dabei für jeden augenblicklichen Zustand des Kanals in Abhängigkeit von einem neuen Symbol $c_m$ den neuen Zustand an, wobei nachfolgend ein Trelliszustand zum zeitpunkt $\mu$ mit $S_\mu$ bezeichnet wird und durch $S_\mu = (c_{\mu-L+1}, ..., c_\mu)$ definiert ist.

Jedem Zustandswechsel $S_{\mu-1} \rightarrow S_\mu$ kann ein metrisches Inkrement zugewiesen werden, welches dann später zur Beurteilung der Wahrscheinlichkeit dieses Zustandswechsels ausgewertet wird und durch die folgende Formel definiert ist:

$$\lambda(S_{\mu-1}, S_\mu) = \left| z_\mu - \sum_{l=0}^{L} c_{\mu-l} h_l \right|^2 / \sigma^2 \quad (6)$$

Die logarithmische Ermittlung der Soft Decision-Information nach Gleichung (1) besitzt den Vorteil, daß die Zustandsmetriken, welche von dem MAP-Algorithmus ausgegeben werden, ohne Umformungen übernommen werden können.

Unter Verwendung dieser Metrikformel (6) kann nunmehr die dem in Fig. 2 gezeigten Kanal 6 entsprechende Trellis ausgewertet werden, um zu jedem Zustand $S_\mu$ für jeden Trellis- oder Zeitschritt $\mu$ entsprechende Wahrscheinlichkeiten zu berechnen. Dabei wird idealerweise die Trellis sowohl in Rückwärts- als auch in Vorwärtsrichtung durchlaufen. Nachfolgend soll der Algorithmus zur Verarbeitung eines Empfangsworts $\underline{z}$, wie er beispielsweise als 'Maximum Likelihood Sequence Estimätion'-Algorithmus (MLSE) ausführlich in "Optimum And Sub-Optimum Detection Of Coded Data Disturbed By Time-Varying Intersymbol Interference", Wolfgang Koch und Alfred Baier, 1990 IEEE, beschrieben ist, näher erläutert werden.

Beim Rückwärtsdurchlaufen der Trellis kann für jeden Trellisschritt $\mu$ von $\mu$ = M bis $\mu$ = L sowie für jeden Trelliszustand $S_\mu$ eine Rückwärtsmetrik $\Lambda_b(S_\mu)$ unter Verwendung der folgenden Rekursion berechnet werden:

$$\Lambda_b(S_{\mu-1}) = -\ln\left\{\exp\left(-\Lambda_b(S'_\mu) - \lambda(S_{\mu-1}, S'_\mu)\right) + \exp\left(-\Lambda_b(S''_\mu) - \lambda(S_{\mu-1}, S''_\mu)\right)\right\} \quad (7)$$

Die beiden Zustände $S'_\mu$ und $S''_\mu$ sind durch den Zustand $S_{\mu-1}$ bei Vorliegen des Zustandswerts $c_\mu = +1$ bzw. $c_\mu = -1$ definiert.

Auf analoge Art und Weise kann für jeden Trelliszustand $s_\mu$ eine Vorwärtsmetrik $\Lambda_f(S_\mu)$ unter Verwendung der folgenden Rekursion berechnet werden:

$$\Lambda_f(S_\mu) = -\ln\left\{\exp\left(-\Lambda_f(S'_{\mu-1}) - \lambda(S'_{\mu-1}, S_\mu)\right) + \exp\left(-\Lambda_f(S''_{\mu-1}) - \lambda(S''_{\mu-1}, S_\mu)\right)\right\} \quad (8)$$

In diesem Fall sind die beiden Zustände $S'_{\mu-1}$ und $S''_{\mu-1}$ durch den Zustand $S_\mu$ bei Vorliegen des Zustandswerts $c_{\mu-L} = +1$ bzw. $C_{\mu-L} = -1$ definiert.

Für jeden Zustandsübergang $S_{\mu-1} \rightarrow S_\mu$ der Trellis können nunmehr die Metriken $\Lambda_f(S_{\mu-1})$ , $\lambda(S_{\mu-1}, S_\mu)$ und $\Lambda_b(S_\mu)$ addiert und ihre inversen Exponentiale über sämtliche Zustände $S_\mu$ getrennt für $c_{\mu-L} = -1$ und $c_{\mu-L} = +1$ aufaddiert werden:

$$u(c_{\mu-L}) = -\ln\left\{\sum_{S_\mu} \exp(-\Lambda_f(S_{\mu-1}) - \lambda(S_{\mu-1}, S_\mu) - \Lambda_b(S_\mu))\right\} \quad (9)$$

Mit Hilfe des in der Formel (9) dargestellten Ausdrucks kann schließlich zum Zeitpunkt $\mu$ ein Soft Decision-

Wert $q(c_{\mu\text{-}L})$ für das Bit $c_{\mu\text{-}L}$ berechnet werden, indem die anhand der Formel (9) berechneten Werte für $c_{\mu\text{-}L}$ = +1 und $c_{\mu\text{-}L}$ = -1 zueinander in Beziehung gesetzt werden:

$$q(c_{\mu\text{-}L}) = u(c_{\mu\text{-}L} = +1) - u(c_{\mu\text{-}L} = -1) \qquad (10)$$

Zur Verdeutlichung der obigen Formel (9) ist in Fig. 3A ein Ausschnitt der dem in Fig. 2 gezeigten Kanalmodell zugeordneten Trellis für L = 2 und $c_m$ = +1 dargestellt, während in Fig. 3B ein Ausschnitt derselben Trellis für $c_m$ = -1 dargestellt ist. Dabei sind sowohl in Fig. 3A als auch in Fig. 3B lediglich diejenigen Pfade der Trellis dargestellt, welche bei diesem Beispiel zu der Summe der Formel (9) beitragen. Des weiteren sind in Fig. 3A und 3B jeweils die Metriken $\Lambda_f(S_{\mu-1})$ , $\lambda(S_{\mu-1}, S_\mu)$ und $\Lambda_b(S_\mu)$ eingetragen.

Da mit Hilfe der oben beschriebenen Vorgehensweise optimale Soft Decision-Werte als Zuverlässigkeitsinformationen gewonnen werden können, wird dieser Algorithmus in "Optimum And Sub-Optimum Detection Of Coded Data Disturbed By Time-Varying Intersymbol Interference", Wolfgang Koch und Alfred Baier, 1990 IEEE, als 'Optimum Soft Decision Equalization Algorithm (OSDE)' bezeichnet.

Da jedoch dieser Algorithmus viel Speicherplatz und einen großen Rechenaufwand erfordert, besteht das Bedürfnis nach einem vereinfachten Algorithmus, dessen Komplexität einerseits deutlich reduziert ist und der andererseits dennoch möglichst genaue Zuverlässigkeitsinformationen liefert.

Diesbezüglich wird in "Optimum And Sub-Optimum Detection Of Coded Data Disturbed By Time-Varying Intersymbol Interference", Wolfgang Koch und Alfred Baier, 1990 IEEE, zunächst vorgeschlagen, in der Formel (9) die Exponentialberechnungen zu vereinfachen. Die Formel (9) enthält allgemein einen Ausdruck der Form $-\ln(e^{-x}+e^{-y})$, wobei jedoch für derartige Ausdrücke die folgende Beziehung gilt:

$$-\ln(e^{-x} + e^{-y}) = \min(x,y) - \ln(1 + e^{-|y-x|}) \qquad (11)$$

Für x << y und x >> y kann somit der Ausdruck $-\ln(e^{-x}+e^{-y})$ mit vernachlässigbarem Fehler durch die Minimalwertbildung min(x,y) angenähert werden. Eine weitere Vereinfachung kann erzielt werden, wenn auf das Rückwärtsdurchlaufen der Trellis verzichtet und somit in der Formel (9) die Metriken $\Lambda_b(S_\mu)$ für sämtliche Zustände $S_\mu$ auf 0 gesetzt werden.

Die Berechnung der Zuverlässigkeitsinformation zum Zeitpunkt μ für den Zeitpunkt μ-L gemäß Formel (10) vereinfacht sich somit wie folgt:

$$q(c_{\mu-L}) = \min_{S_\mu | c_{\mu-L}=+1} (\Lambda_f(S_{\mu-1}) + \lambda(S_{\mu-1}, S_\mu)) - \min_{S_\mu | c_{\mu-L}=-1} (\Lambda_f(S_{\mu-1}) + \lambda(S_{\mu-1}, S_\mu)) \qquad (12)$$

Der wesentliche Unterschied zum klassischen Viterbi-Algorithmus besteht somit lediglich darin, daß zur Berechnung der Soft Decision-Werte $q(c_{\mu\text{-}L})$ nur die Auswahl von zwei Minimalwerten aus einer Menge von $2^L$ Metriken erforderlich ist. In "Optimum And Sub-Optimum Detection Of Coded Data Disturbed By Time-Varying Intersymbol Interference", Wolfgang Koch und Alfred Baier, 1990 IEEE, wird dieser suboptimale Algorithmus daher als 'Soft Decision Viterbi Equalizer (SDVE)' bezeichnet.

Insbesondere ist aus Formel (12) ersichtlich, daß gemäß diesem suboptimalen Algorithmus der Soft Decision-Wert $q(c_{\mu\text{-}L})$ einerseits von dem Pfad mit der zum Zeitpunkt μ-L besten Pfadmetrik für den Wert +1 ('Maximum One Path', MOP) und andererseits von dem Pfad mit der zum Zeitpunkt μ-L besten Pfadmetrik für den Wert -1 (bzw. 0) ('Maximum Zero Path', MZP) abhängt.

Nachdem zuvor die Ermittlung der Soft Decison-Information $q(c_n)$ beschrieben worden ist, soll nachfolgend näher auf die erfindungsgemäß vorgeschlagene Abschätzung der Bitfehlerrate (BER) in Abhängigkeit von dieser Soft Decision-Information eingegangen werden.

Wie in Fig. 1 gezeigt ist, weist der Empfänger 7 einen Bitfehlerrate-Schätzer 15 auf, der die von dem Entzerrer 8 ermittelten Soft Decision-Informationen bzw. Zuverlässigkeitsinformationen $q(c_n)$ empfängt und davon abhängig Schätzinformationen p über die Bit- oder Symbolfehlerrate erzeugt.

Die Soft Decision-Information $q(c_n)$ nach Formel (1) oder (4) wird in K Klassen oder Stufen quantisiert, d.h. es gilt die Abbildung

$$q(c_n) \mapsto q_k \text{ mit } k = 0 \ldots K\text{-}1 \tag{13}$$

Für jede dieser K Klassen läßt sich nach Formel (1) oder (4) eine Klassenfehlerrate $p_k$ berechnen, wobei für alle Symbole der Klasse k gilt:

$$q_k = \ln\frac{P\{c_n = +1\}}{P\{c_n = -1\}} = \ln\frac{1-p_k}{p_k} \tag{14}$$

In Formel (14) bezeichnet $q_k$ die Symbolfehlerrate der Klasse k mit $p_k = P\{c_n = -1\}$ (und somit $P\{c_n = +1\} = 1-p_k$).

Aus Formel (14) folgt demnach für die Symbolfehlerrate $p_k$ einer Klasse

$$p_k = \frac{1}{1+\exp(q_k)} \tag{15}$$

Die Schätzinformation p über die Symbolfehlerrate eines kompletten Bursts kann von dem in Fig. 1 gezeigten Bitfehlerrate-Schätzer 15 nunmehr aus den einzelnen Klassenfehlerraten $p_k$ wie folgt berechnet werden, wobei $n_k$ die Anzahl der geschätzten Symbole in der jeweiligen Klasse k bezeichnet:

$$p = \frac{\sum_{k=0}^{K-1}(n_k p_k)}{\sum_{k=0}^{K-1} n_k} \tag{16}$$

Gemäß Formel (16) wird somit zur Berechnung von p die Summe aller Symbolfehlerraten des Bursts durch die Anzahl der Symbole des Bursts dividiert.

Die Abschätzung der Bitfehlerrate kann vereinfacht werden, wenn davon ausgegangen wird, daß die Soft Decision-Information $q(c_n)$ durch den zuvor erläuterten suboptimalen Algorithmus gewonnen werden. Wegen

$$q(c_n) = \ln\frac{P\{\underline{z}_n | c_n = +1\}}{P\{\underline{z}_n | c_n = -1\}} = \ln(P\{\underline{z}_n | c_n = +1\}) - \ln(P\{\underline{z}_n | c_n = -1\}) \tag{17}$$

können durch Vergleich mit Formel (12) hierzu folgende Annäherungen vorgenommen werden:

$$2\sigma^2 \ln(P\{\underline{z}_n | c_n = +1\}) \approx MOP \tag{18}$$

$$2\sigma^2 \ln(P\{\underline{z}_n | c_n = -1\}) \approx MZP \tag{19}$$

Wie bereits erwähnt worden ist, bezeichnet MOP die im Rahmen des zuvor beschriebenen suboptimalen Algorithmus berechnete Pfadmetrik für den besten Pfad des Trellis-Diagramms, der zum Zeitpunkt μ-L den Wert +1 besitzt, während MZP die Pfadmetrik für den besten Pfad des Trellis-Diagramms, der zum Zeitpunkt μ-L den Wert -1 besitzt, bezeichnet (vgl. Formel (12)).

Ausgehend von den Näherungen gemäß Formel (18) und (19) kann somit die Soft Decision-Information $q(c_n)$ des Entzerrers 8 in Übereinstimmung mit Formel (1) angenähert wie folgt ausgedrückt werden:

$$q(c_n) = C\frac{MOP - MZP}{2\sigma^2} \qquad (20)$$

Dabei bezeichnet C eine Skalierungskonstante. Die auf diese Weise angenäherte Soft Decision-Information kann wie oben beschrieben in mehrere Klassen unterteilt, d.h. quantisiert werden, wobei typischerweise für binäre Datenübertragungen acht Klassen (K = 8) ausreichend sind. Gemäß Formel (15) kann dann für jede Klasse aus $q_k$ die entsprechende Klassenfehlerrate $p_k$ berechnet werden. Die Bitfehlerrate p des kompletten Bursts folgt aus den einzelnen Klassenfehlerraten $p_k$ gemäß Formel (16).

Für die Bitfehlerschätzung eines typischen GSM-Bursts mit 116 Symbolen und K = 8 ergibt sich somit:

$$p = \frac{\sum_{k=0}^{7}(n_k p_k)}{116} \qquad (21)$$

Der zuvor beschriebene Ansatz zur Abschätzung der Bitfehlerrate unter Verwendung der Werte MOP und MZP wurde bereits durch Simulationen getestet. Die Simulationsergebnisse sind in Fig. 5 dargestellt, wobei in Fig. 5 die Bitfehlerrate (BER) über das C/I-Verhältnis (Verhältnis des jeweiligen Trägersignals zu Nachbarkanalstörungen) aufgetragen und davon ausgegangen worden ist, daß es sich bei dem Empfangssignal um ein TU50-Signal und bei den Nachbarkanalstörungen um TU50-Nachbarkanäle handelt. In Fig. 5 entspricht die Kennlinie (a) dem Verlauf der unter diesen Bedingungen gemessenen Bitfehlerrate, während die Kennlinien (b) und (c) dem Verlauf der mit Hilfe des obigen Verfahrens geschätzten Bitfehlerrate für C = 1,1 bzw. C = 1,3 entspricht. Aus Fig. 5 ist ersichtlich, daß mit Hilfe dieses angenäherten Schätzverfahrens relativ gut die tatsächliche Bitfehlerrate abgeschätzt werden kann.

Die zuvor beschriebene Bitfehlerratenschätzung läßt sich selbstverständlich auch auf mehrwertige Symbolalphabete anwenden.

## Patentansprüche

1. Verfahren zum Schätzen der Bitfehlerrate in einem Funkempfänger,
wobei in dem Funkempfänger (7) mittels eines Entzerrers (8) Zuverlässigkeitsinformationen (q) erzeugt werden, welche Wahrscheinlichkeiten dafür angeben, daß ein von dem Funkempfänger (7) über einen Funkkanal (6) empfangenes Datensymbol (z) auf einem bestimmten gesendeten Wert (c) beruht,
**dadurch gekennzeichnet,**
**daß** durch Auswertung der Zuverlässigkeitsinformationen (q) Bitfehlerrate-Informationen (p) über die Bitfehlerrate des den empfangenen Datensymbolen (z) entsprechenden Empfangssignals mittels eines Bitfehlerrate-Schätzers (15) gewonnen werden,
**daß** die Zuverlässigkeitsinformationen (q) in dem Funkempfänger in Form von Soft Decision-Informationen erzeugt werden, und
**daß** die Bitfehlerrate-Informationen (p) **dadurch** gewonnen werden, daß die Soft Decision-Informationen in mehrere Quantisierungsstufen quantisiert werden, aus jeder quantisierten Soft Decision-Information eine Symbolfehlerrate-Information für die entsprechende Quantisierungsstufe ermittelt wird und in Abhängigkeit davon die Bitfehlerrate-Informationen p für einen kompletten Burst gemäß folgender Formel berechnet werden:

$$p = \frac{\sum_{k=0}^{K-1}(n_k p_k)}{\sum_{k=0}^{K-1} n_k},$$

wobei K die Anzahl der Quantisierungsstufen, $n_k$ die Anzahl der geschätzten Symbole in der Quantisierungsstufe k und $p_k$ die Symbolfehlerrate der Quantisierungsstufe k bezeichnet.

2. Verfahren nach Anspruch 1,
**dadurch gekennzeichnet,**
**daß** die Symbolfehlerrate-Information $p_k$ der Quantisierungsstufe k aus der quantisierten Soft Decision-Information $q_k$ derselben Quantisierungsstufe gemäß der Formel

$$p_k = \frac{1}{1+\exp(q_k)}$$

berechnet wird.

3. Verfahren nach Anspruch 1 oder 2,
**dadurch gekennzeichnet,**
**daß** Soft Decision-Information q gemäß der Formel

$$q = \ln\frac{P1}{P2}$$

ermittelt wird, wobei P1 die Wahrscheinlichkeit dafür angibt, daß ein empfangenes Datensymbol (z) auf einem ersten gesendeten Wert beruht, während P2 die Wahrscheinlichkeit dafür angibt, daß ein empfangenes Datensymbol (z) auf einem zweiten gesendeten Wert beruht, und
**daß** die Wahrscheinlichkeit P1 durch eine Pfadmetrik eines ersten Pfads eines den Funkkanal (6) beschreibenden Trellis-Diagramms angenähert wird, wobei der erste Pfad derjenige Pfad des Trellis-Diagramms ist, der zu einem bestimmten Zeitpunkt den ersten gesendeten Wert mit der besten Pfadmetrik aufweist, und
**daß** die Wahrscheinlichkeit P2 durch eine Pfadmetrik eines zweiten Pfads des Trellis-Diagramms angenähert wird, wobei der zweite Pfad derjenige Pfad des Trellis-Diagramms ist, der zu dem bestimmten Zeitpunkt den zweiten gesendeten Wert mit der besten Pfadmetrik aufweist.

4. Verfahren nach Anspruch 3,
**dadurch gekennzeichnet,**
**daß** der Wert ln(P1) durch den Wert MOP/2$\sigma^2$ und der Wert ln(P2) durch den Wert MZP/2$\sigma^2$ angenähert wird, wobei MOP die Pfadmetrik des ersten Pfads und MZP die Pfadmetrik des zweiten Pfads des Trellis-Diagramms und $\sigma^2$ die dem Empfangssignal entlang des Funkkanals (6) überlagerte Rauschleistung bezeichnet.

5. Verfahren nach Anspruch 4,
**dadurch gekennzeichnet,**
**daß** die Soft Decision-Information q näherungsweise gemäß der Formel

$$q = C\frac{MOP - MZP}{\sigma^2}$$

berechnet und anschließend in die k Quantisierungsstufen quantisiert wird, wobei C eine Skalierungskonstante darstellt.

6. Funkempfänger,
mit einem Entzerrer (8) zum Entzerren eines über einen Funkkanal (6) empfangenen Funksignals und zum Erzeugen von Zuverlässigkeitsinformationen (q), welche Wahrscheinlichkeiten dafür angeben, daß ein empfangenes Datensymbol (z) auf einem bestimmten gesendeten Wert beruht,
**dadurch gekennzeichnet,**
**daß** ein Bitfehlerrate-Schätzer (15) vorgesehen ist, der durch Auswertung der von dem Entzerrer (8) gelieferten Zuverlässigkeitsinformationen (q) Bitfehlerrate-Informationen (p) über die Bitfehlerrate des den empfangenen Datensymbolen (z) entsprechenden Empfangssignals gewinnt,
**daß** der Entzerrer (8) derart ausgelegt ist, daß er die Zuverlässigkeitsinformationen (q) in Form von Soft Decision-Informationen erzeugt, und

**daß** der Bitfehlerrate-Schätzer (15) derart ausgelegt ist, daß er die Bitfehlerrate-Informationen (p) **dadurch** gewinnt, daß die Soft Decision-Informationen in mehrere Quantisierungsstufen quantisiert werden, aus jeder quantisierten Soft Decision-Information eine Symbolfehlerrate-Information für die entsprechende Quantisierungsstufe ermittelt wird und in Abhängigkeit davon die Bitfehlerrate-Informationen p für einen kompletten Burst gemäß folgender Formel berechnet werden:

$$p = \frac{\sum_{k=0}^{K-1}(n_k p_k)}{\sum_{k=0}^{K-1} n_k},$$

wobei K die Anzahl der Quantisierungsstufen, $n_k$ die Anzahl der geschätzten Symbole in der Quantisierungsstufe k und $p_k$ die Symbolfehlerrate der Quantisierungsstufe k bezeichnet.

**7.** Funkempfänger nach Anspruch 6,
**dadurch gekennzeichnet,**
**daß** der Bitfehlerrate-Schätzer (15) zwischen den Entzerrer (8) und einen Deinterleaver (9) geschaltet ist.

## Claims

**1.** Method for estimating the bit error rate in a radio receiver,
reliability information (q) indicating probabilities that a data symbol (z) received by the radio receiver (7) via a radio channel (6) is based on a specific transmitted value (c) being generated in the radio receiver (7), by means of an equalizer (8)
**characterized**
**in that** bit error rate information (p) regarding the bit error rate of the reception signal corresponding to the received data symbols (z) is obtained by evaluating the reliability information (q) by means of a bit error rate estimater (15),
**in that** the reliability information (q) is generated in the radio receiver in the form of soft decision information, and
**in that** the bit error rate information (p) is obtained by quantizing the soft decision information into a plurality of quantization levels, determining a symbol error rate information item for the corresponding quantization level from each quantized soft decision information item, and, in a manner dependent thereon, calculating the bit error rate information p for a complete burst in accordance with the following formula:

$$p = \frac{\sum_{k=0}^{K-1}(n_k p_k)}{\sum_{k=0}^{K-1} n_k},$$

where K denotes the number of quantization levels, $n_k$ denotes the number of estimated symbols in the quantization level k and $p_k$ denotes the symbol error rate of the quantization level k.

**2.** Method according to Claim 1,
**characterized**
**in that** the symbol error rate information $p_k$ of the quantization level k is calculated from the quantized soft decision information $q_k$ of the same quantization level in accordance with the formula

$$p_k = \frac{1}{1 + \exp(q_k)}.$$

**3.** Method according to Claim 1 or 2,
**characterized**
**in that** soft decision information q is determined in accordance with the formula

$$q = \ln \frac{P1}{P2}$$

where P1 indicates the probability that a received data symbol (z) is based on a first transmitted value, while P2 indicates the probability that a received data symbol (z) is based on a second transmitted value, and
**in that** the probability P1 is approximated by a path metric of a first path of a trellis diagram which describes the radio channel (6), the first path being that path of the trellis diagram which has the first transmitted value with the best path metric at a specific instant, and
**in that** the probability P2 is approximated by a path metric of a second path of the trellis diagram, the second path being that path of the trellis diagram which has the second transmitted value with the best path metric at the specific instant.

**4.** Method according to Claim 3,
**characterized**
**in that** the value ln(P1) is approximated by the value $MOP/2\sigma^2$ and the value ln(P2) is approximated by the value $MZP/2\sigma^2$,
where MOP denotes the path metric of the first path and MZP denotes the path metric of the second path of the trellis diagram and $\sigma^2$ denotes the noise power superposed on the reception signal along the radio channel (6).

**5.** Method according to Claim 4, **characterized**
**in that** the soft decision information q is calculated to an approximation in accordance with the formula

$$q = C\frac{MOP - MZP}{2\sigma^2}$$

and is subsequently quantized into the k quantization levels, where C represents a scaling constant.

**6.** Radio receiver,
having an equalizer (8) for equalizing a radio signal received via a radio channel (6) and for generating reliability information (q) indicating probabilities that a received data symbol (z) is based on a specific transmitted value,
**characterized in that** a bit error rate estimator (15) is provided, which obtains bit error rate information (p) regarding the bit error rate of the reception signal corresponding to the received data symbols (z) by evaluating the reliability information (q) supplied by the equalizer (8),
**in that** the equalizer (8) is designed in such a way that it generates the reliability information (q) in the form of soft decision information, and
**in that** the bit error rate estimator (15) is designed in such a way that it obtains the bit error rate information (p) by quantizing the soft decision information into a plurality of quantization levels, determining a symbol error rate information item for the corresponding quantization level from each quantized soft decision information item, and, in a manner dependent thereon, calculating the bit error rate information p for a complete burst in accordance with the following formula:

$$p = \frac{\sum_{k=0}^{K-1}(n_k p_k)}{\sum_{k=0}^{K-1} n_k},$$

where K denotes the number of quantization levels, $n_k$ denotes the number of estimated symbols in the quantization level k and $p_k$ denotes the symbol error rate of the quantization level k.

7. Radio receiver according to Claim 6,
**characterized**
**in that** the bit error rate estimator (15) is connected between the equalizer ((8) and a deinterleaver (9).

## Revendications

1. Procédé d'évaluation du taux d'erreur sur les bits d'un récepteur radio,
dans lequel on produit dans le récepteur (7) radio, au moyen d'un égalisateur (8), des informations (q) de fiabilité qui indiquent des probabilités qu'un symbole (z) de donnée reçu par le récepteur (7) radio par l'intermédiaire d'un canal (6) radio repose sur une valeur (c) émise déterminée,
**caractérisé**
**en ce qu'**en évaluant les informations (q) de fiabilité, on obtient, au moyen d'un évaluateur (15) du taux d'erreur sur les bits, des informations (p) sur le taux d'erreur sur les bits du signal reçu correspondant aux symboles (z) de données reçus,
**en ce que** l'on produit les informations (q) de fiabilité dans le récepteur radio sous la forme d'informations de décision en logiciel, et
**en ce que** l'on obtient les informations (p) sur le taux d'erreur sur les bits en quantifiant les informations de décision en logiciel en plusieurs paliers de quantification, en déterminant à partir de chaque information de décision en logiciel quantifiée une information de taux d'erreur sur le symbole pour le palier de quantification correspondant et en calculant en fonction de cela les informations p sur le taux d'erreur sur les bits pour une rafale complète suivant la formule :

$$p = \frac{\sum_{k=0}^{K-1}(n_k p_k)}{\sum_{k=0}^{K-1} n_k},$$

dans laquelle K est le nombre des paliers de quantification, $n_k$ est le nombre des symboles évalués dans le palier k de quantification et $p_k$ le taux d'erreur sur les symboles de l'état k de quantification.

2. Procédé suivant la revendication 1, **caractérisé**
**en ce que** l'on calcule les informations $p_k$ sur le taux d'erreur sur les symboles du palier k de quantification à partir de l'information $q_k$ de décision en logiciel quantifiée du même palier de quantification suivant la formule

$$p_k = \frac{1}{1 + \exp(q_k)}$$

3. Procédé suivant la revendication 1 ou 2, **caractérisé**
**en ce qu'**on détermine l'information q de décision en logiciel suivant la formule

$$q = \ln \frac{P1}{P2}$$

P1 étant la probabilité qu'un symbole (z) de donnée reçu repose sur une première valeur émise, tandis que P2 est la probabilité qu'un symbole (z) de donnée reçu repose sur une deuxième valeur émise, et
**en ce que** l'on obtient une approximation de la probabilité P1 par une métrique d'un premier trajet d'un diagramme-treillis décrivant le canal (6) radio, le premier trajet étant le trajet du diagramme-treillis qui a, à un instant déterminé, la première valeur émise avec la meilleure métrique de trajet, et
**en ce qu'**on obtient une approximation de la probabilité P2 par une métrique d'un deuxième trajet du diagramme-treillis, le deuxième trajet étant le trajet du diagramme-treillis qui a, à l'instant déterminé, la deuxième valeur émise ayant la meilleure métrique de trajet.

4. Procédé suivant la revendication 3, **caractérisé**

**en ce que** l'on obtient une approximation de la valeur ln(P1) par la valeur $MOP/2\sigma^2$ et de la valeur Ln(P2) par la valeur $MZP/2\sigma^2$,

MOP étant la métrique du premier trajet et MZP la métrique du deuxième trajet du diagramme-treillis et $\sigma^2$ étant la puissance de bruit superposée au signal de réception le long du canal (6) radio.

**5.** Procédé suivant la revendication 4, **caractérisé**

**en ce que** l'on calcule l'information q de décision en logiciel approximativement suivant la formule

$$q = C\frac{MOP\text{-}MZP}{2\sigma^2}$$

et on la quantifie ensuite en les k paliers de quantification, C étant une constante d'échelle.

**6.** Récepteur radio,

comprenant un égalisateur (8) pour égaliser un signal radio reçu par un canal (6) radio et pour produire des informations (q) de fiabilité qui indiquent les probabilités qu'un symbole (z) de donnée reçu repose sur une certaine valeur émise,

**caractérisé**

**en ce qu'**il est prévu un évaluateur (15) du taux d'erreur sur les bits qui obtient, en exploitant les informations (q) de fiabilité fournies par l'égalisateur (8), des informations (p) de taux d'erreur sur les bits du signal de réception correspondant aux symboles (z) de données reçus,

**en ce que** l'égalisateur (8) est conçu de façon à produire les informations (q) de fiabilité sous la forme d'informations de décision en logiciel, et

**en ce que** l'évaluateur (15) de taux d'erreur sur les bits est conçu de façon à obtenir les informations (p) de taux d'erreur sur les bits en quantifiant les informations de décision en logiciel en plusieurs paliers de quantification, en déterminant à partir de chaque information de décision en logiciel quantifiée une information de taux d'erreur sur les symboles pour le palier de quantification correspondant et en calculant en fonction de cela les informations p de taux d'erreur sur les bits pour une rafale complète selon la formule suivante :

$$p = \frac{\sum_{k=0}^{K-1}(n_k p_k)}{\sum_{k=0}^{K-1} n_k},$$

dans laquelle K est le nombre des paliers de quantification, $n_k$ est le nombre des symboles évalués dans le palier k de quantification et $p_k$ le taux d'erreur sur les symboles de l'état k de quantification.

**7.** Récepteur radio suivant la revendication 6, **caractérisé**

**en ce que** l'évaluateur (15) de taux d'erreur sur les bits est monté entre l'égalisateur (8) et un désimbriqueur (9).

FIG 1

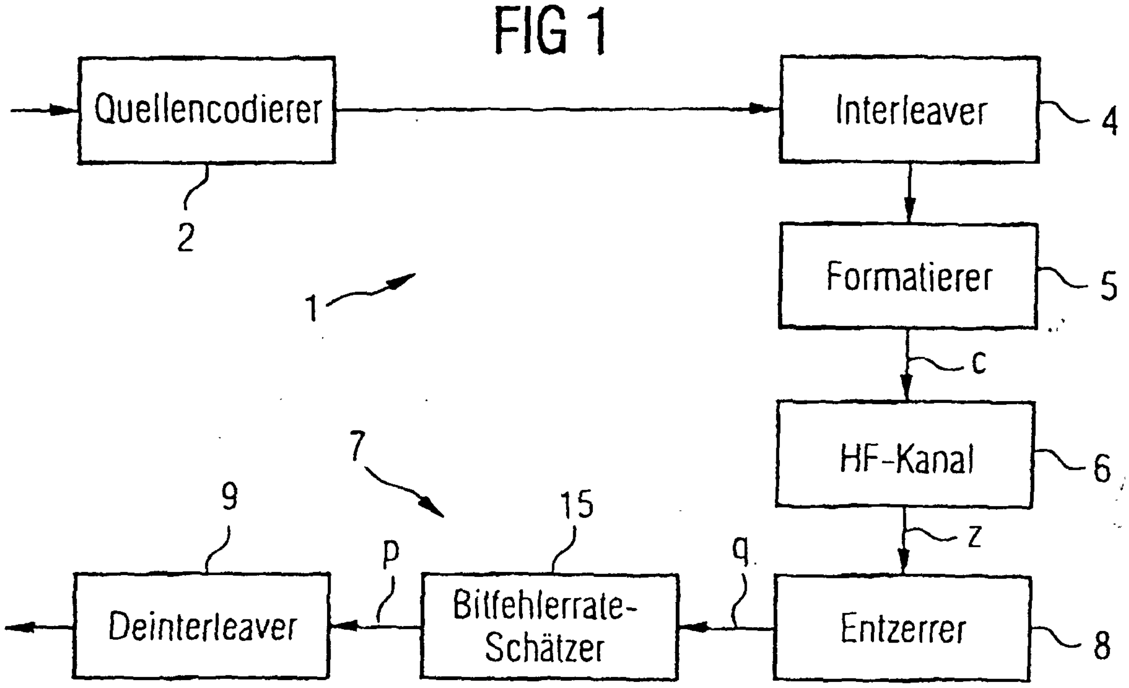
Quellencodierer
Interleaver
4
2
Formatierer
5
1
c
HF-Kanal
6
7
9
15
z
p
q
Deinterleaver
Bitfehlerrate-
Schätzer
Entzerrer
8

FIG 2

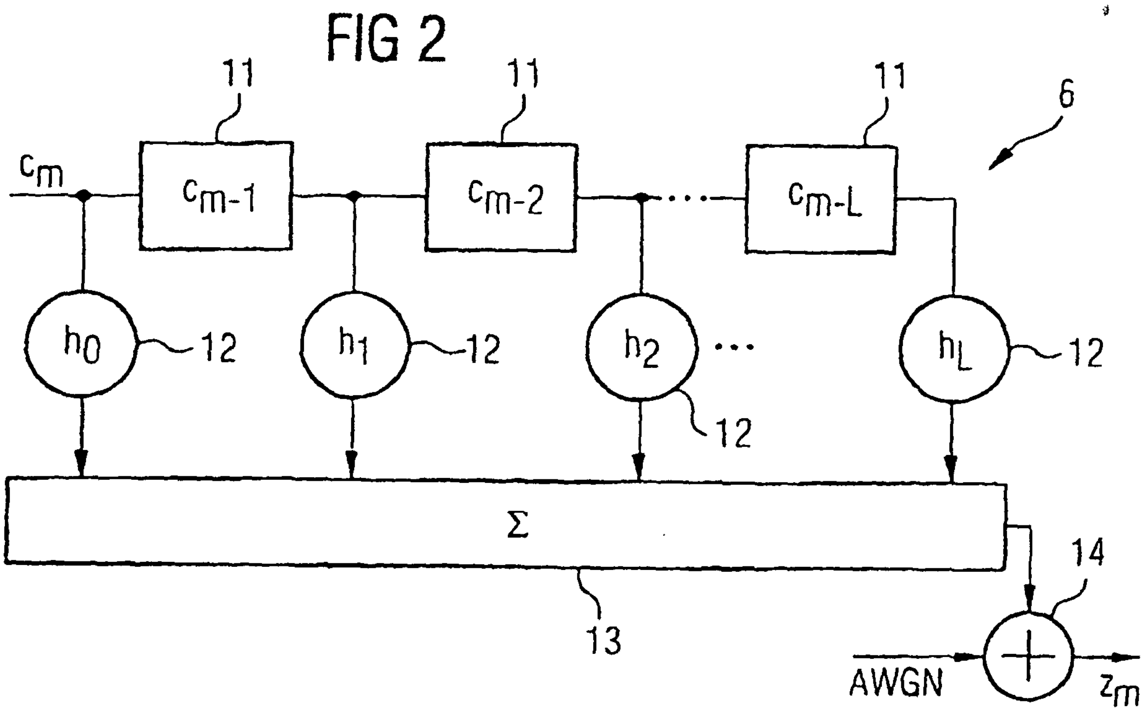
11
11
11
6
$c_m$
$c_{m-1}$
$c_{m-2}$
$c_{m-L}$
$h_0$
12
$h_1$
12
$h_2$
$h_L$
12
12
Σ
14
13
AWGN
$z_m$

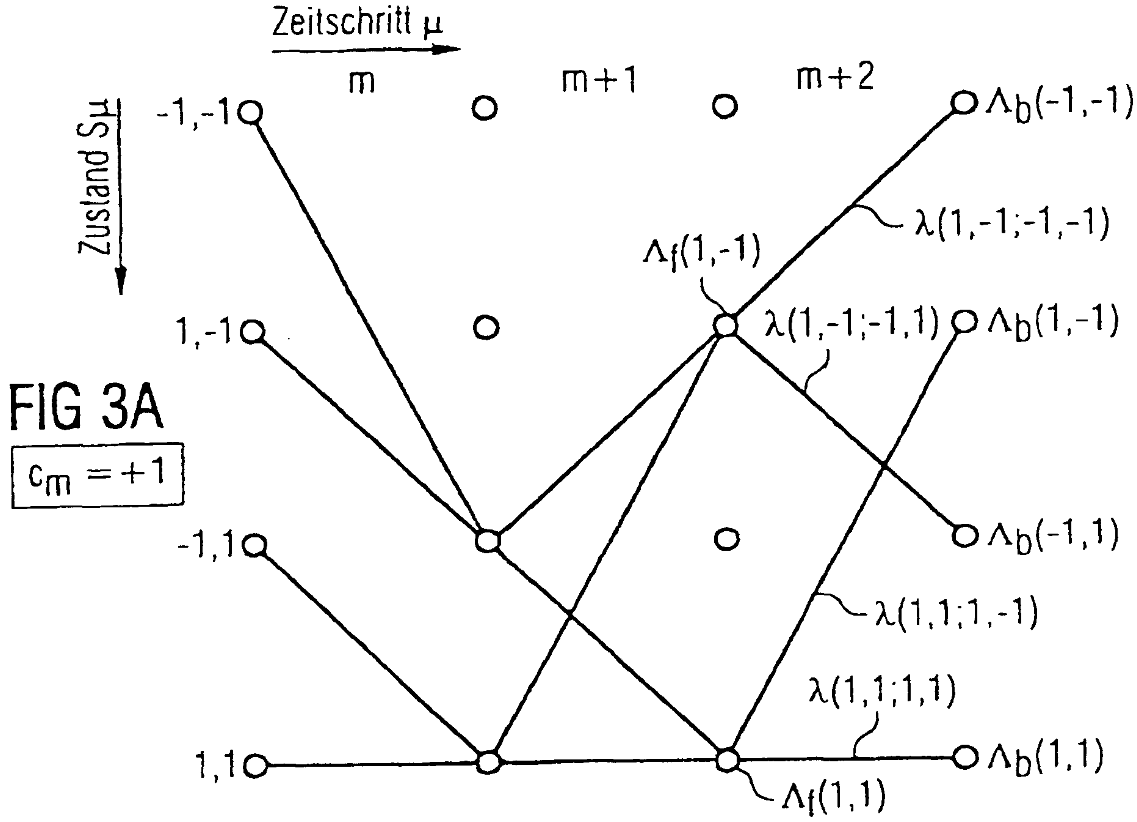
Zeitschritt μ
Zustand Sμ
m
m+1
m+2
-1,-1
1,-1
-1,1
1,1
Λb(-1,-1)
λ(1,-1;-1,-1)
Λf(1,-1)
λ(1,-1;-1,1)
Λb(1,-1)
Λb(-1,1)
λ(1,1;1,-1)
λ(1,1;1,1)
Λb(1,1)
Λf(1,1)
cm =+1

FIG 3A

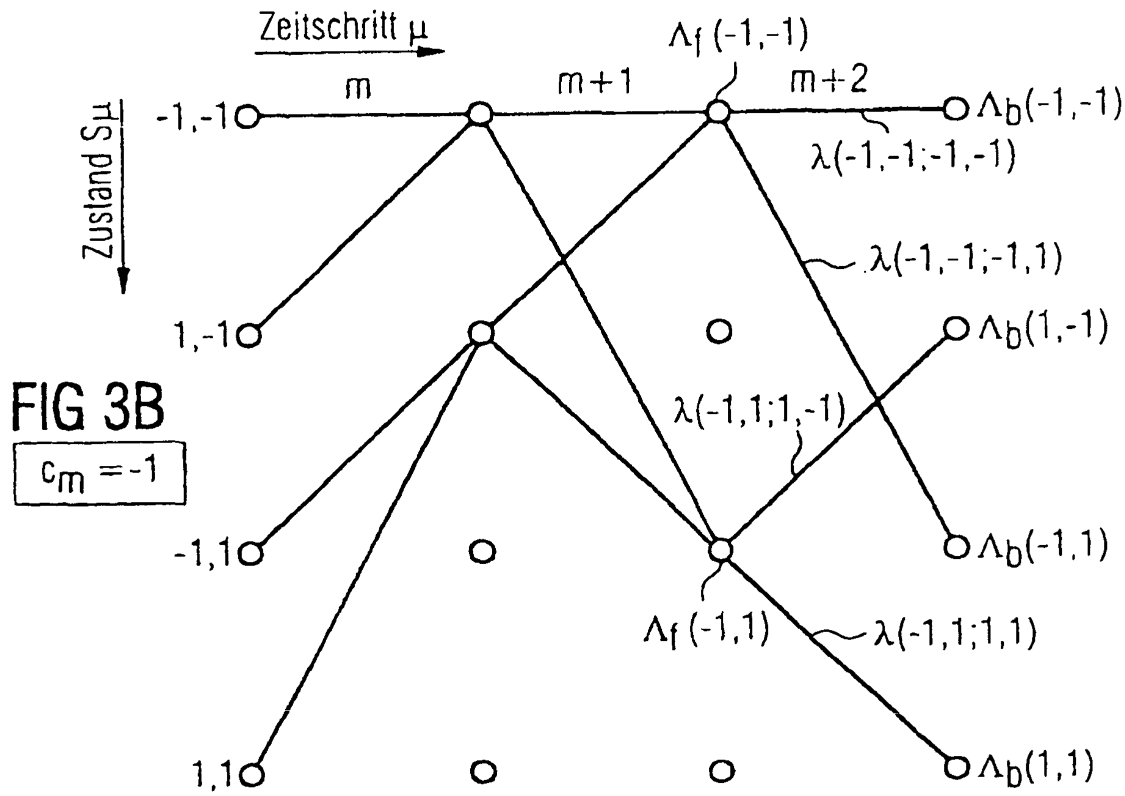
Zeitschritt μ
Zustand Sμ
m
m+1
m+2
Λf (-1,-1)
-1,-1
1,-1
-1,1
1,1
Λb(-1,-1)
λ(-1,-1;-1,-1)
λ(-1,-1;-1,1)
Λb(1,-1)
λ(-1,1;1,-1)
Λb(-1,1)
Λf (-1,1)
λ(-1,1;1,1)
Λb(1,1)
cm =-1

FIG 3B

FIG 4 (STAND DER TECHNIK)

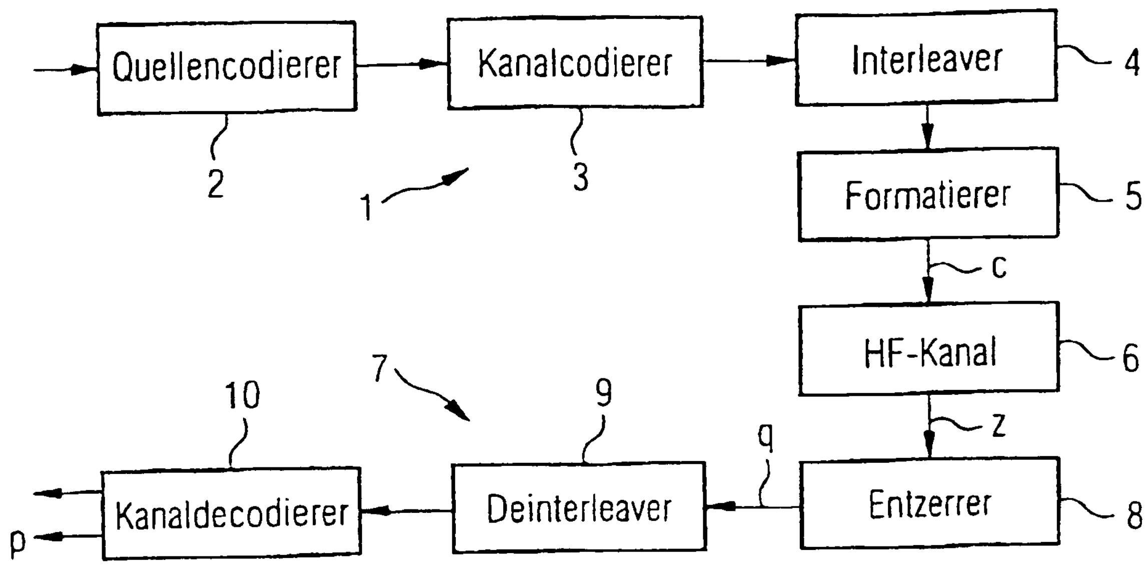


FIG 5